# EUROPEAN PATENT SPECIFICATION

(11) **EP 4 311 644 B1**
(45) Date of publication and mention of the grant of the patent: **10.12.2025**
(21) Application number: 23185590.9
(22) Date of filing: 14.07.2023
(51) Int. Cl.: B29B 17/00, B29B 17/04, B29L 31/00

(54) **PROCESS FOR THE TREATMENT OF THE PHOTOPOLYMER MATERIAL THAT CONSTITUTES THE MATRIX PLATES IN FLEXOGRAPHIC PRINTING**
VERFAHREN ZUR BEHANDLUNG DES PHOTOPOLYMEREN MATERIALS, DAS DIE MATRIXPLATTEN IM FLEXODRUCK BILDET
PROCÉDÉ DE TRAITEMENT DU MATÉRIAU PHOTOPOLYMÈRE CONSTITUANT DES PLAQUES MATRICIELLES D'IMPRESSION FLEXOGRAPHIQUE

(30) Priority: 25.07.2022 IT 202200015606
(43) Date of publication of application: 31.01.2024
(73) Proprietor: Nicoletti, Ira, 30034 Mira (VE) (IT)
(72) Inventor: Nicoletti, Ira, 30034 Mira (VE) (IT)
(74) Representative: Piovesana, Paolo

(56) References cited:
- CN-A- 113 799 512
- DE-A1- 4 232 187
- GB-A- 2 270 990
- JP-A- 2007 261 120
- KR-A- 20180 115 443

## Description

The present invention relates to a process for treating the photopolymer material which forms the matrix plates in flexographic printing.

It is known that the photopolymer material which constitutes the matrix plates used in flexographic printing is a material which wears out over time or becomes outdated in order to be replaced.

Flexography is a direct rotary printing method that uses relief matrix plates made of rubber or photopolymer material called clichés.

At the end of the printing process the master plates are discarded.

This elimination involves some drawbacks and in particular:
- a disposal cost,
- a cost of loss of material.

GB2270900 describes a process for recycling exposed and/or unexposed photopolymer flexographic printing plate containing a photopolymerizable recording layer and a support, comprising (a) separating the unexposed or exposed recording layer from the support and comminuting the material and (b) adding the material to a photopolymer usable mixture.

DE4232187 relates to a recyclable material in photosensitive printing plates and uses a band knife splitter to part individual layers.

CN113799512 provides a double-layer structure flexible photosensitive printing plate and a preparation method thereof.

KR20280115443 describes a method of manufacturing a recycled flexographic printing plate.

JP2007261120A provides a method for regenerating a flexographic printing plate.

The object of the invention is to eliminate these drawbacks and to use the matrix slabs to produce a new product which has the aim of identifying a possible field of application for their recycling, such as for example a filler for common polymeric matrices.

These aims are achieved according to the invention with a treatment process of the photopolymer material which constitutes the matrix plates in flexographic printing as described in claim 1.

The present invention is hereinafter further explained in a preferred embodiment thereof, given for purely exemplifying but non-limiting purposes with reference to the following description.

The process according to the invention provides for starting from a matrix plate of photopolymer material of different sizes, waste from the matrix plates used in flexographic printing, which is transformed into powder to be reused through the transformation processes of the thermoplastic polymers.

The photopolymer cliché in plate form is reduced into pieces smaller than 10 mm in each direction through a system of shredding and then refining machine.

For the reduction of the photopolymer cliché pieces into powder, the cold grinding method was used, using dry ice or nitrogen, to obtain a powder with a particle size of less than 500 microns.

The grinding into powder is performed at temperatures ranging from - 35°C to -140°C with the cryomilling technique with the use of nitrogen and a " cryomill " machine.

The ideal grain size is from 100 to 500 microns, preferably 100-250 microns. The grinding has not compromised the original characteristics of the material.

The powder is subsequently dried at a temperature of 80-120°C, preferably 100°C for preferably two hours and subsequently fed into a twinscrew extruder with corotating screws with rotation of the screws between 150 RPM and 250 RPM where it is mixed in mass with polymeric melt of any thermoplastic resin, the polymeric melt/powder ratio being 80:20, at the melting temperature which can be between 160-300°C. For example, the polymer melt is based on polypropylene.

At the exit of the extruder a homogeneous mass (mixture of thermoplastic material, for example polypropylene, and the above powder intimately mixed with the polymer) was collected in the form of an extruded thread, cooled (for example in air at a temperature of 25°C or in water at 15°C) to then be pelletized in the form of granules.

From what has been said it is clear that the process according to the invention allows to obtain an additive which, when mixed with a thermoplastic resin, allows to obtain a composite which keeps the performance characteristics of the thermoplastic resin practically unchanged, thus allowing a saving of raw material, energy and thus guaranteeing the product made with the resin a lower environmental impact.

## Claims

1. A process for treating the photopolymer material that makes up the master plates in flexographic printing comprising the following steps:
- shredding and refining the slabs into pieces smaller than 10 mm in any direction;
- subsequent cold grinding to obtain a powder with a particle size ranging from 100 to 500 microns;
- drying the powder at a temperature of 80-120°C for preferably two hours;
- introducing the dried powder into a twin- screw extruder with co-rotating screws with rotation of the screws between 150 and 250 rpm where it is mass mixed with a polymer melt at a temperature of 160-300°C;
- collecting at the exit of the extruder a homogeneous mass mixture of polymer melt and powder which is collected in the form of an extruded thread which is cooled;
- pelletizing the extruded wire.

2. Process according to claim 1 **characterized in that** the photopolymer is ground and refined into pieces of 5 mm

3. Process according to claim 1 **characterized in that** by cold grinding a powder is obtained with a particle size ranging from 100 to 250 microns.

4. Process according to claim 1 **characterized in that** the polymer melt is based on polypropylene.

5. Process according to claim 1 **characterized in that** the cooling takes place in air at a temperature of about 25°C.

6. Process according to claim 1 **characterized in that** the cooling takes place in water at a temperature of about 15°C.

7. Process according to claim 1 **characterized in that** the dried powder is mixed with the polymer melt in a polymer melt/powder ratio of 80:20.

## Patentansprüche

1. Verfahren zum Behandeln des photopolymeren Materials, das die Matrixplatten für den Flexodruck bildet, umfassend die folgenden Schritte:
- Zerkleinern und Verfeinern der Rohplatten in Stücke, die in jeder Richtung kleiner als 10 mm sind;
- anschließendes Kaltmahlen, um ein Pulver mit einer Partikelgröße zwischen 100 und 500 Mikrometern zu erhalten;
- Trocknen des Pulvers bei einer Temperatur von 80-120 °C für vorzugsweise zwei Stunden;
- Einführen des getrockneten Pulvers in einen Doppelschneckenextruder mit gleichlaufenden Schnecken mit einer Drehzahl zwischen 150 und 250 U/min, wo es bei einer Temperatur von 160 bis 300 °C mit einer Polymerschmelze massengemischt wird;
- Sammeln einer homogenen Massenmischung aus Polymerschmelze und Pulver am Ausgang des Extruders, die in Form eines extrudierten Fadens gesammelt und gekühlt wird;
- Granulieren des extrudierten Drahtes.

2. Verfahren nach Anspruch 1, **dadurch gekennzeichnet, dass** das Photopolymer in Stücke von 5 mm gemahlen und verfeinert wird.

3. Verfahren nach Anspruch 1, **dadurch gekennzeichnet, dass** durch Kaltmahlen ein Pulver mit einer Partikelgröße im Bereich von 100 bis 250 Mikrometern erhalten wird.

4. Verfahren nach Anspruch 1, **dadurch gekennzeichnet, dass** die Polymerschmelze auf Polypropylen basiert.

5. Verfahren nach Anspruch 1, **dadurch gekennzeichnet, dass** das Kühlen an der Luft bei einer Temperatur von etwa 25 °C erfolgt.

6. Verfahren nach Anspruch 1, **dadurch gekennzeichnet, dass** das Kühlen in Wasser bei einer Temperatur von etwa 15 °C erfolgt.

7. Verfahren nach Anspruch 1, **dadurch gekennzeichnet, dass** das getrocknete Pulver mit der Polymerschmelze in einem Verhältnis von Polymerschmelze/Pulver von 80:20 gemischt wird.

## Revendications

1. Procédé de traitement du matériau photopolymère qui constitue les plaques maîtresses dans l'impression flexographique, comprenant les étapes suivantes :
- le déchiquetage et l'affinage des plaques en morceaux d'une taille inférieure à 10 mm dans toutes les directions ;
- le broyage à froid ultérieur pour obtenir une poudre dont la taille des particules est comprise entre 100 et 500 microns ;
- le séchage de la poudre à une température de 80-120°C de préférence pendant deux heures ;
- l'introduction de la poudre séchée dans une extrudeuse à deux vis à vis co-rotatives ayant une rotation des vis comprise entre 150 et 250 tours/minute où sa masse est mélangée à un polymère fondu à une température de 160-300°C ;
- la collecte, à la sortie de l'extrudeuse, d'un mélange de masse homogène de polymère fondu et de poudre qui est recueilli sous la forme d'un fil extrudé qui est refroidi ;
- la granulation du fil extrudé.

2. Procédé selon la revendication 1, **caractérisé en ce que** le photopolymère est broyé et affiné en morceaux de 5 mm.

3. Procédé selon la revendication 1, **caractérisé en ce que** le broyage à froid permet d'obtenir une poudre dont la taille des particules est comprise entre 100 et 250 microns.

4. Procédé selon la revendication 1, **caractérisé en ce que** le polymère fondu est à base de polypropylène.

5. Procédé selon la revendication 1, **caractérisé en ce que** le refroidissement se déroule à l'air libre à une température d'environ 25°C.

6. Procédé selon la revendication 1, **caractérisé en ce que** le refroidissement s'effectue dans l'eau à une température d'environ 15°C.

7. Procédé selon la revendication 1, **caractérisé en ce que** la poudre séchée est mélangée au polymère fondu dans un rapport polymère fondu/poudre de 80:20.
